# FASCICULE DE BREVET EUROPEEN

(11) **EP 2 367 722 B1**
(45) Date de publication et mention de la délivrance du brevet: **27.01.2016**
(21) Numéro de dépôt: 09805704.5
(22) Date de dépôt: 18.12.2009
(51) Int. Cl.: B64G 1/00, B64G 1/40

(54) **MODULE REUTILISABLE POUR LANCEUR**
WIEDERVERWENDBARES MODUL FÜR EIN STARTGERÄT
REUSABLE MODULE FOR A LAUNCHER

(30) Priorité: 22.12.2008 FR 0858940
(43) Date de publication de la demande: 28.09.2011
(73) Titulaire: Airbus Defence and Space SAS, 78130 Les Mureaux (FR)
(72) Inventeur: PRAMPOLINI, Marco, F-78240 Chambourcy (FR); GOGDET, Olivier, 78100 Saint Germain en Laye (FR)
(74) Mandataire: Ilgart, Jean-Christophe
(86) Numéro de dépôt international: PCT/EP2009/067549
(87) Numéro de publication internationale: WO 2010/072681

(56) Documents cités:
- EP-A- 1 162 139
- WO-A-99/47418
- US-B1- 6 450 452
- US-B1- 6 616 092

## Description

### DOMAINE TECHNIQUE ET ART ANTÉRIEUR

La présente invention se rapporte à un module réutilisable destinée à former une partie d'un module de propulsion destiné à d'envoyer un engin dans l'espace, l'engin étant par exemple un lanceur destiné à envoyer une charge utile dans l'espace, telle que des satellites de télécommunication.

La fusée Ariane V est un exemple bien connu de lanceur comportant un corps central formé d'un premier étage appelé étage principal cryotechnique (EPC) et d'un deuxième étage, appelé étage propulsif stockable (EPS). Le premier étage transporte de l'oxygène et de l'hydrogène liquides refroidis à de très basses températures, ces fluides alimentant un moteur cryotechnique. Le dernier étage supporte la charge futile à lancer, par exemple un satellite. La fusée comporte également de part et d'autre du corps central, deux étages accélérateurs à poudre (EAP) utilisés pour le décollage. Le moteur cryotechnique est mis en route avant le décollage et fonctionne jusqu'à la séparation du premier et du deuxième étage.

Il existe également des lanceurs utilisant une propulsion au méthane ou une propulsion à poudre.

Ces lanceurs, en particulier les premiers étages de ces lanceurs, sont complètement consommables, i.e. on ne cherche pas à réutiliser celui-ci.

Le développement et la fabrication d'un lanceur représentent un coût très important. Par ailleurs un tel développement est très long.

Il a alors été envisagé de concevoir un lanceur dont le premier étage est réutilisable, i.e. qu'il peut retourner sur le sol sans dommage après sa séparation d'avec le deuxième étage. Un tel lanceur est décrit dans le document EP 1 162 139. La partie du corps du lanceur formant le premier étage est composée d'une partie inférieure de propulsion, d'une partie intermédiaire formée par des réservoirs de carburant et de comburant et d'une partie supérieure destinée au retour de l'ensemble de premier étage au sol. Pour cela, le premier étage est muni d'un ensemble de moyens adaptés pour permettre le retour sur terre et son atterrissage. Le premier étage comporte des surfaces portantes repliées le long du premier étage lors du lancement du lanceur et destinée à se déplier pour le retour du premier étage sur le sol, un train d'atterrissage, un système de commande, et des moteurs aérobies pour assurer le vol retour et pour l'exécution des manoeuvres d'atterrissage.

Ce lanceur présente l'avantage de permettre de récupérer complètement tout le premier étage.

Cependant une telle construction a plusieurs inconvénients. D'une part, lors de la séparation d'avec le deuxième étage, les réservoirs de la partie intermédiaire sont vides, ils représentent donc un très grand volume de masse très faible. Par conséquent, la densité moyenne du premier étage est faible, ce qui rend le premier étage très difficilement récupérable. Par ailleurs, il nécessite la mise en oeuvre d'une grande voilure rapportée sur l'enveloppe du lanceur, notamment au niveau des réservoirs qui est généralement peu rigide. Il faut donc prévoir de rigidifier la zone d'accrochage. L'ajout de cette voilure et des renforts représente une masse supplémentaire qu'il faut propulser, impliquant donc une augmentation de la taille des réservoirs et donc une augmentation sensible du coût du lanceur. Par conséquent, le gain obtenu en récupérant entièrement le premier étage est partiellement perdu dans les modifications impliquées pour permettre cette récupération. Par ailleurs, ce type de lanceur est très éloigné des lanceurs connus.

Le but de la présente invention est donc d'offrir un lanceur dont les coûts de construction et d'exploitation sont réduits par rapport aux coûts des lanceurs actuels.

### EXPOSÉ DE L'INVENTION

Le but précédemment énoncé est atteint par un lanceur comportant au moins un étage, ledit étage étant divisé en deux parties une première partie contenant les moteurs fusées, l'avionique, la baie de propulsion, et le système de pressurisation des réservoirs et les moyens de vol aérobies autonomes (surface portante, moteur aérobie et son carburant), et une deuxième partie formée par les réservoirs, les deux parties étant séparables après le lancement, la première partie comportant des moyens pour permettre son retour sur la terre sans dommage afin d'être réutilisée dans un nouveau lanceur. La première partie forme la partie inférieure dudit étage.

En d'autres termes, on prévoit de réutiliser les éléments ayant un coût élevé, pour cela on réalise un module détachable équipé d'une surface portante et d'un moteur d'avion permettant son atterrissage sur une piste conventionnelle. La non récupération des réservoirs permet de rendre la partie récupérée beaucoup plus facilement récupérable, du fait de sa densité augmentée.

La position inférieure de la partie récupérée associée à la présence d'empennages offre par ailleurs une grande stabilité au lanceur lui-même lors de la phase ascendante.

De manière avantageuse, on prévoit d'utiliser une partie de l'empennage du lanceur comme voilure pour le retour sur terre, ce qui supprime le problème de l'accrochage des ailes et n'augmente pas la masse du lanceur.

La présente invention a alors principalement pour objet un module récupérable pour module de propulsion destiné à lancer un engin dans l'espace comportant au moins un étage, ledit module récupérable étant solidaire d'une partie non récupérée lors du lancement, ledit module récupérable comportant un système propulsif destiné au lancement de l'engin, des systèmes de commande et de contrôle du système propulsif, un moteur de propulsion en vol subsonique, des surfaces portantes pour le vol subsonique, un train d'atterrissage et un parachute de freinage, ledit module récupérable étant destiné à être disposé en position inférieure dudit étage, la partie non récupérée comportant au moins un réservoir pour alimenter le système propulsif, ledit module récupérable et ladite partie non récupérée étant destinés à être séparés lorsque le module de propulsion atteint une altitude donnée, le module récupérable étant apte à atterrir de manière maîtrisée après un vol de croisière, par exemple pour un retour vers le site de lancement.

De manière particulièrement avantageuse, les surfaces portantes sont formées par une partie au moins de l'empennage dudit engin. L'empennage comporte au moins deux ailettes. Par exemple, il en comporte trois dont deux sont de forme modifiable pour former des surfaces portantes.

Chacune des deux ailettes modifiables comporte, par exemple une première partie fixée sur l'enveloppe du module et une deuxième partie montée mobile sur la première partie, le déplacement de la deuxième partie par rapport à la première partie étant obtenu par exemple au moyen d'au moins un moteur électrique ou hydraulique.

Le module récupérable comporte également, de manière avantageuse, un canal central d'axe confondu avec l'axe du module récupérable, le moteur de propulsion en vol subsonique étant disposé dans ledit canal central, ainsi que le parachute de freinage enfermé dans un boîtier appelé canister, ledit canister étant disposé dans le canal d'éjection en arrière du moteur du moteur de propulsion en vol subsonique.

Dans le cas d'un moteur de propulsion en vol subsonique de type moteur aérobie, son carburant peut être stocké dans des réservoirs prévus dans les ailettes formant empennage.

Avantageusement, le module récupérable a un nez émoussé, pour augmenter la trainée d'onde supersonique lors de la phase initiale de la rentrée atmosphérique et contribuer au ralentissement du module récupérable.

En phase de vol supersonique, le module récupérable peut comporter des moyens pour modifier la traînée du culot, par exemple des moyens du type cône gonflable.

Le module récupérable peut comporter des systèmes de contrôle d'attitude pour modifier l'attitude du module par rapport au plan de trajectoire, lesdits systèmes étant par exemple disposés à l'extrémité de l'ailette de l'empennage formant dérive.

La présente invention a également pour objet un modulé de propulsion destiné à lancer un engin dans l'espace comportant au moins un étage comportant un module récupérable selon la présente invention et une partie destinée à ne pas être récupérée, comportant au moins un réservoir pour alimenter le système propulsif.

La présente invention a également pour objet un engin de type lanceur équipé d'un module de propulsion selon la présente invention, comportant au moins deux étages, un étage formé par le module de propulsion et un étage supportant une charge utile, lesdits deux étages étant séparables, le lanceur pouvant être du type nanolanceur jusqu'au lanceur superlourd.

Par ailleurs, Le module de propulsion peut former l'étage inférieur du lanceur ou un dès étages supérieurs.

La présente invention a également pour objet une méthode de récupération du module récupérable selon la présente invention comportant les étapes :
a) de séparation du module récupérable et de la partie non récupérée,
b) de chute libre du module récupérable,
c) de déploiement du parachute de freinage lorsque la vitesse du module récupérable devient subsonique,
d) de mise en route du moteur de propulsion en vol subsonique et de mise en place des surfaces portantes,
e) de largage du parachute,
f) d'amorçage d'une ressource, après une éventuelle réaccélération,
g) de croisière de retour, et
h) d'atterrissage.

De manière avantageuse, l'étape c) a lieu à un Mach compatible de l'ouverture d'un parachute subsonique, par exemple proche de Mach 0,85.

Lors de l'étape a), la séparation du module récupérable et de la partie non récupérée peut avoir lieu dans une direction sensiblement orthogonale au plan de la trajectoire.

L'étape d) a avantageusement lieu à pression dynamique faible, de l'ordre de 400 Pa pour faciliter la variation de forme de la surface portante et disposer du temps nécessaire à la mise en route du moteur de propulsion.

### BRÈVE DESCRIPTION DES DESSINS

La présente invention sera mieux comprise à l'aide de la description qui va suivre et des dessins en annexes sur lesquels :
- la figure 1 est une vue en perspective d'un lanceur bi-étage selon la présente invention,
- la figure 2 représente des vues écorchées du lanceur de la figure 1 représenté sous deux angles différents,
- la figure 3 est une vue en coupe longitudinale de la figure 2,
- la figure 4 est une vue arrière du lanceur de la figure 3,
- la figure 5 est une vue en perspective écorchée du module réutilisable selon la présente invention,
- la figure 6 est une vue de côté du module de la figure 5,
- la figure 7 est une vue de derrière du module de la figure 5,
- les figures 8A et 8B sont des représentations schématiques de la trajectoire du module de la figure 5 représentant la hauteur Z du module en mètre en fonction de la distance D mesurée au sol en mètre parcourue par rapport au point de séparation du premier et du deuxième étage,
- les figures 9A à 9I sont des vues du module de la figure 5 dans les différentes configurations prises lors de son retour sur le sol.

### EXPOSÉ DÉTAILLÉ DE MODES DE RÉALISATION PARTICULIERS

Dans la description qui va suivre, nous décrirons en détail un lanceur du type à deux étages pour expliquer l'invention, mais il est bien entendu que l'invention ne se limite pas à ce type de lanceurs, comme nous lé verrons par la suite.

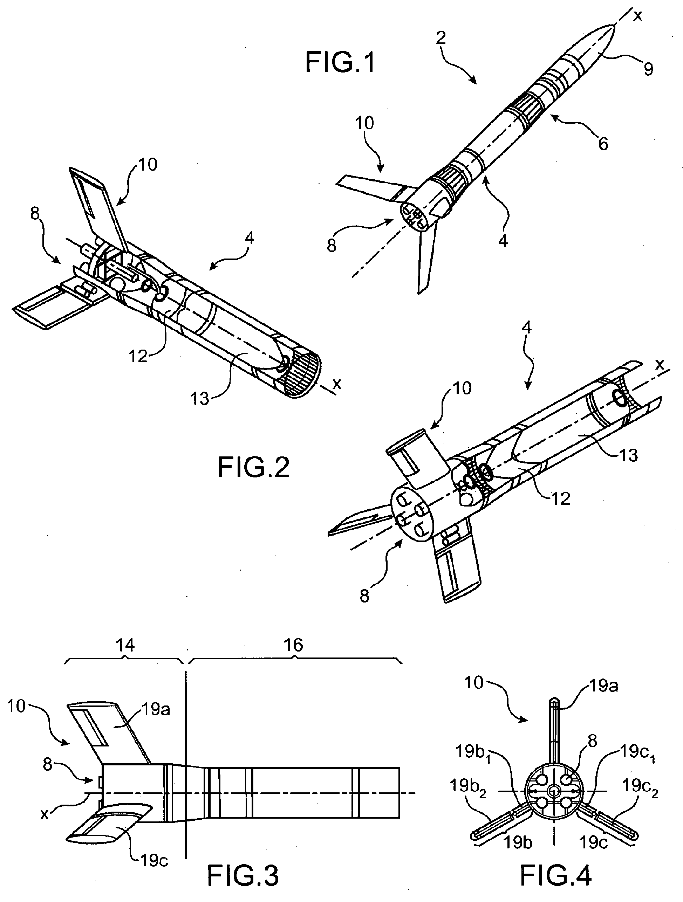

Sur les figures 1 à 4, on peut voir un lanceur selon la présente invention destiné, par exemple a placer des satellites de télécommunication en orbite.

Le lanceur 2 comporte un premier étage 4, un deuxième étage 6 et une coiffe 9..

Le premier étage 4 comporte les éléments destinés à la propulsion du lanceur, qui seront décrits par la suite.

Le deuxième étage 6 supporte notamment la charge, par exemple le satellite à mettre en orbite.

Le premier étage comporte à son extrémité inférieure un ensemble propulsif 8 assurant le décollage du lanceur. Dans l'exemple représenté, cet ensemble propulsif est composé de quatre moteurs cryotechniques et de l'ensemble des moyens de commande des moteurs.

Le lanceur comporte également un empennage 10 au niveau de la périphérie extérieure du premier étage dans sa partie inférieure. L'empennage 10 participe, lors de la phase de décollage, à la stabilisation aérodynamique du lanceur. Dans l'exemple représenté, l'empennage est composé de trois ailettes réparties uniformément autour de la périphérie du premier étage.

Le premier étage 4 comporte également les réservoirs 12, 13 de substances nécessaires à l'alimentation du système propulsif 8 lors du décollage. Il s'agit, dans le cas de moteurs cryotechniques, d'un réservoir d'oxygène liquide 12, et d'un réservoir d'hydrogène liquide 13.

Selon la présente invention, le premier étage 4 est divisé en une première partie 14 destinée à être réutilisée dans un lanceur et en une deuxième partie 16 destinée à être perdue, appelée partie non récupérée. La première partie 14 est également appelée module.

Le module 14 comporte les éléments ayant un coût élevé et dont la réutilisation est très avantageuse. Il s'agit notamment de l'ensemble propulsif 8 du lanceur, de la baie de propulsion, du système de pressurisation, de l'avionique et des moyens de génération de puissance électrique.

La partie non récupérée 16 contenant le ou les réservoirs est réalisée de telle sorte qu'elle ne comporte pas ou peu de pièces complexes dont le coût soit élevé, de sorte à réduire le coût des pièces à fournir pour un nouveau vol. Celle-ci étant consommable, sa structure est réduite aux éléments strictement nécessaires à l'alimentation du système propulsif de manière efficace et sûre.

Selon l'invention, le module 14 présente une grande densité, puisqu'il ne comporte pas les volumes vides formés par les réservoirs après le lancement.

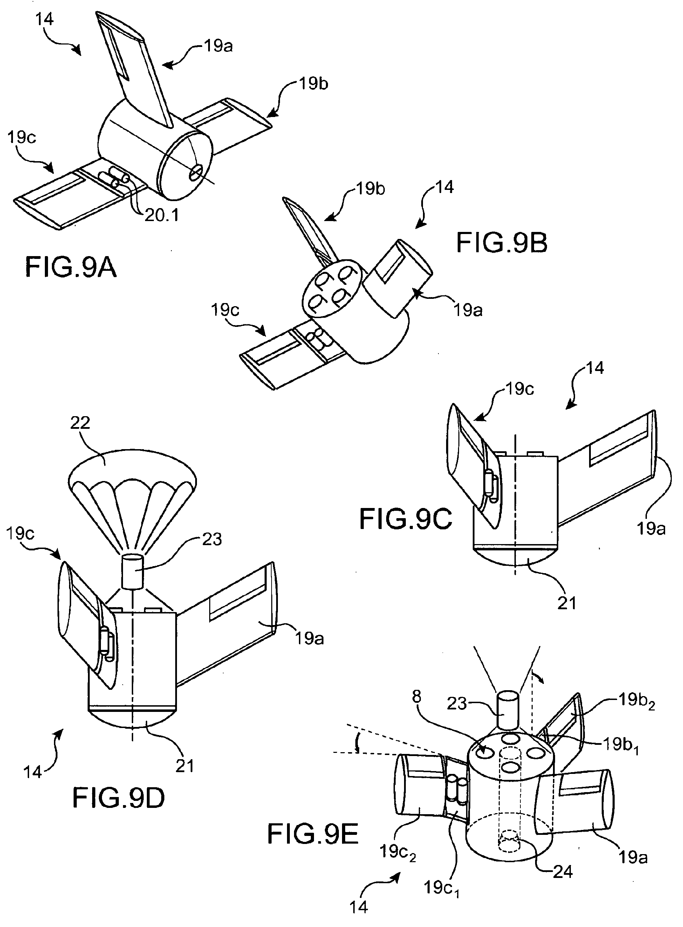

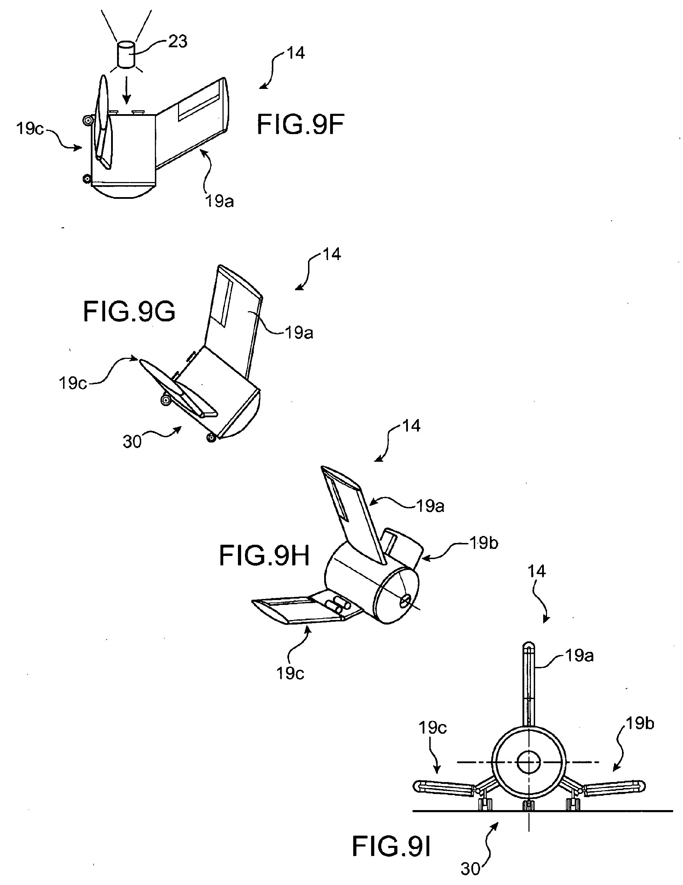

Selon la présente invention, le module 14 est tel qu'il assure son retour sur terre. Sur lés figures 9A à 9I, on peut voir le module lors de différentes phases de retour sur terre.

Dans l'exemple représenté, le module 14 est prévu au niveau de l'extrémité inférieure du premier étage 4. En effet, le module 14 présentant une surface empennée importante et étant en position basse, a pour effet de reculer le foyer aérodynamique et donc d'augmenter la marge statique en phase ascendante atmosphérique du lanceur.

Il est alors possible d'abaisser le réservoir rempli d'oxygène, qui est le plus lourd au décollage. Ce qui a pour effet de rapprocher le réservoir d'oxygène des moteurs cryotechniques, la marge statique restant suffisante pour assurer la grande stabilité du lanceur. Le rapprochement du réservoir 12 d'oxygène et des moteurs cryotechniques permet de réduire la longueur des lignes d'alimentation du premier étage, conduisant à une réduction de la masse, de la capacité et donc du coût du premier étage.

Selon un mode particulièrement avantageux de l'invention qui sera décrit en détail par la suite, on prévoit de réutiliser une partie de l'empennage comme surfaces portantes pour le retour sur terre. Ceci est notamment rendu possible par la position basse du module 14, i.e. au niveau de l'empennage du lanceur. En effet le centre de gravité du module récupérable se situe au niveau de l'empennage du lanceur, par conséquent l'empennage, ou au moins une partie de celui-ci est utilisable pour assurer la fonction aérodynamique portante du module pendant la phase de vol subsonique.

Nous allons maintenant décrire en détail le module 14, plus particulièrement les moyens mis en oeuvre pour assurer son retour sur terre.

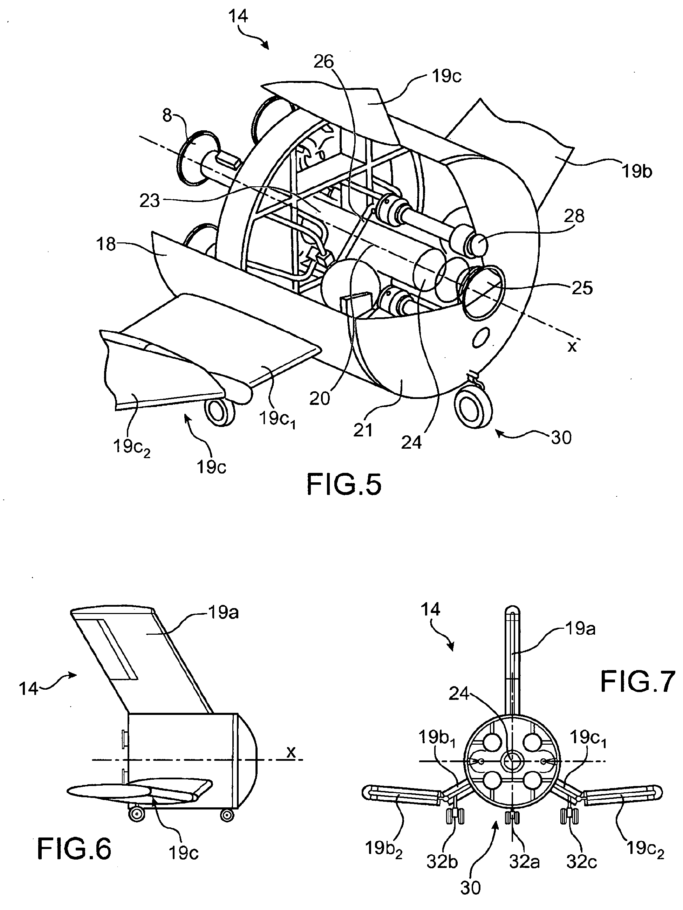

Sur les figures 5 à 7, on peut voir le module récupérable 14 dans sa configuration prêt à effectuer une ressource, l'empennage 10 ayant la configuration en vue de créer une portance aérodynamique.

Le module 14 comporte une enveloppe 18 qui forme une partie de l'enveloppe du premier étage 4 et les trois ailettes 19a, 19b et 19c de l'empennage 10 fixées sur l'enveloppe 18 à 120° les unes des autres.

Le module 14 comporte un nez 21 de forme émoussée favorisant le freinage du fait de l'augmentation de la trainée d'onde supersonique lors de la phase initiale de la rentrée atmosphérique, cette forme réduit le facteur de charge longitudinal maximal (décélération) et la pression dynamique maximale à la rentrée dans l'atmosphère, sans que soit pénalisée significativement la traînée subsonique.

Le module 14 comporte également le système propulsif du lanceur, un moteur 20, par exemple un moteur d'avion de type aérobie, destiné à propulser le module lors de la croisière de retour, des réservoirs 20.1 de carburant, type kérosène, disposés par exemple dans les ailettes de l'empennage comme on peut le voir sur la figure 9A, pour alimenter le moteur 20.

Le module 14 comporte également un parachute de freinage 22 enfermé dans un canister 23.

Dans l'exemple représenté et de manière avantageuse, le module 14 comporte un logement tubulaire 24 ou canal d'éjection prévu le long de l'axe longitudinal X du module et débouchant dans le nez 21 du module et dans le culot du module. Ce logement central reçoit en amont le moteur 20 et en aval le canister 23 avec le parachute 22. Le canal d'éjection 24 pourrait être prévu à l'extérieur du corps, il serait par exemple former de plusieurs canaux répartis de manière symétrique autour du corps.

L'extrémité du logement tubulaire 24 débouchant dans le nez 21 est obturé au moyen d'un volet 25 ; ce volet est mobile pour permettre l'alimentation en air du moteur 20.

Lorsque le module 14 forme la partie basse du premier étage du lanceur, des canalisations 26 du module sont connectées à des canalisations (non représentées) dans la partie non récupérée pour relier les réservoirs de la partie non récupérée 16 aux moteurs cryotechniques 8 du module 14. Lors de la séparation du module 14 d'avec la partie non récupérée, ces canalisations 26 sont obturées par des clapets 28 au niveau de leur raccord avec les canalisations de la partie non récupérée.

Le module 14 comporte également un train d'atterrissage 30. Le module étant très court, il n'est pas nécessaire d'avoir un train d'atterrissage présentant une grande hauteur. On peut donc avantageusement prévoir un train d'atterrissage fixe, en saillie de la surface du lanceur en permanence. Celui-ci peut donc être de réalisation très simple et très robuste. Il est bien entendu qu'un module muni d'un train d'atterrissage rétractable ne sort pas du cadre de la présente invention.

Le train d'atterrissage 30 est composé de trois roues 32a, 32b, 32c. La roue 32a est fixée sur l'enveloppe du module et les roues 32b et 32c sont fixées sur les ailettes 19b et 19c.

Le module 14 comporte des systèmes de contrôle d'attitude (non représentés) destinés à modifier l'attitude du module. De manière avantageuse, les systèmes de contrôle d'attitude sont placés à l'extrémité de l'ailette 19a formant dérive, cette ailette n'étant pas destinée à former une partie de la surface portante. Cette position permet d'offrir un grand bras de levier et donc de faciliter le contrôle d'attitude du module. Il est bien entendu que ces systèmes de contrôle d'attitude pourraient être placés sur les autres ailettes ou sur le corps du module. La structure de ces systèmes de contrôle d'attitude sont connus de l'homme du métier.

Selon un mode particulièrement avantageux de la présente invention deux 19b, 19c des trois ailettes de l'empennage 10 sont configurées de sorte à pouvoir former des surfaces portantes destinées à assurer le retour sur terre du module lors de la phase de ressource lente, de retour croisière et d'atterrissage. Pour cela, on prévoit que leurs formes soient modifiables et puissent passer d'une forme sensiblement plane pour le lancement du lanceur à une forme portante en vol subsonique pour supporter le module. Les ailettes 19b, 19c sont formées de deux parties 19b1, 19b2 et 19c1, 19c2 articulées, permettant leur transformation des ailettes de stabilisation du lanceur en surfaces portantes du module 14.

Les premières parties 19b1, 19c comportent une première extrémité proximale fixée directement sur l'enveloppe du premier étage et une deuxième extrémité distale sur lesquelles sont montées, articulées par une première extrémité, les deuxièmes parties 19b2, 19c2. Le changement de configuration des ailettes, plus particulièrement la modification de l'orientation des deuxièmes parties 19b2, 19c2 par rapport aux premières parties 19b1, 19c1 peut être obtenu par de simples moteurs électriques ou hydrauliques de faible puissance. En effet, comme nous le verrons par la suite, la phase de transformation des ailettes a lieu à faible pression dynamique, celles-ci ne sont donc pas sollicitées lors du déplacement de la partie non récupérée, la puissance requise pour un tel déplacement n'a donc pas besoin d'être importante.

Le module 14 est solidarisé à la partie non récupérée 16 par des moyens de type connu, comme des brides.

Le module 14 présente une grande stabilité passive intrinsèque, i.e. entre le vol hypersonique et Mach 0,8, le module 14 se positionne automatiquement le nez vers l'avant dans le sens de la chute. Ainsi, dans les cas où le module et la partie non récupérée se sépareraient de manière non classique, le module reprendrait automatiquement et naturellement sa position stable, sans qu'il soit nécessaire de prévoir des moyens spécifiques pour assurer ce repositionnement.

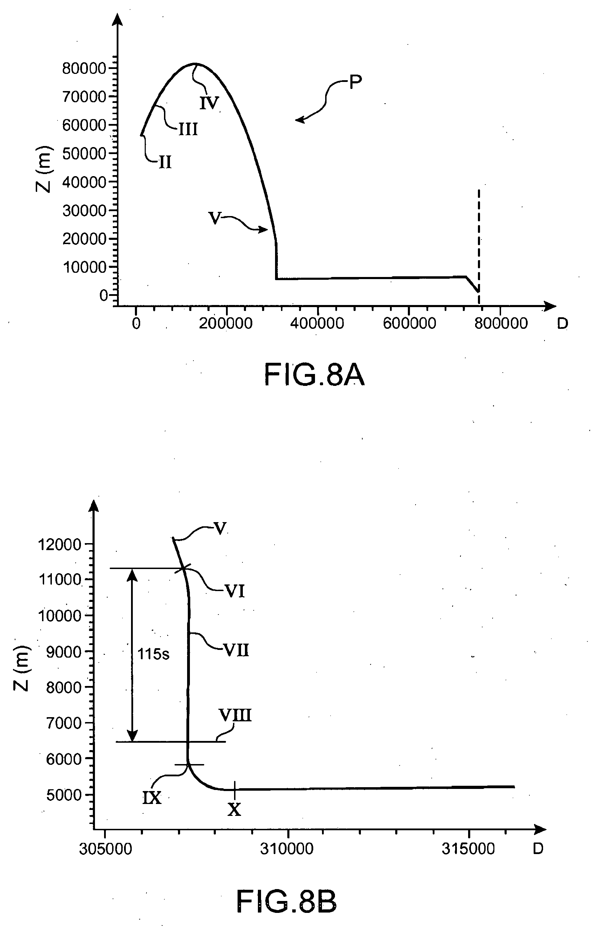

Nous allons maintenant décrire les différentes phases du vol du module selon l'invention au moyen des figures 8A et 8B et des figures 9A à 9I.

Dans sa configuration initiale, le lanceur est composé du premier étage 4, du deuxième étage 6 contenant la charge utile et la coiffe. Le premier étage 4 est composé du module 14 et des réservoirs remplis. Les ailettes 19b et 19c de l'empennage sont plaines, i.e. les premières 19b1, 19c1 et les deuxièmes 19b2, 19c2 sont sensiblement dans un même plan respectivement.

Le lanceur équipé du module 14 décolle à la verticale, propulsé par les moteurs cryotechniques, ceux-ci étant alimentés par les réservoirs disposés dans la partie non récupérée.

A une altitude voisine de 50 km, le premier étage 4 se désolidarise du deuxième étage 6, la vitesse est environ à Mach 5. Désormais le module 14 n'est rattaché qu'aux réservoirs, ce qui correspond à l'étape II de la trajectoire schématisé sur la figure 8A.

Après la séparation d'avec le deuxième étage, le premier étage 4 poursuit une trajectoire balistique suborbitale (phase III) jusqu'à sortir de l'atmosphère terrestre.

C'est alors que le module 14 est séparé de la partie non récupérée 16, la pression dynamique est alors très faible, de l'ordre de 20 Pa (phase IV).

Il est avantageusement prévu d'effectuer la séparation du module et de la partie non récupérée dans un direction perpendiculaire au plan de trajectoire P, qui est formé par le plan de la feuille de la figure 8A, de sorte à assurer une discrimination suffisante entre le module 14 et la partie non récupérée 16. Pour cela, avant la séparation, on oriente le premier étage de sorte à ce que son axe longitudinal soit sensiblement orthogonal au plan de la trajectoire P à l'aide des systèmes de contrôle d'attitude prévus à l'extrémité de l'ailette 19a. Lorsque le premier étage 6 est correctement orienté, on provoque la séparation du module 14 et de la partie non récupérée 16 (figure 9A), par des moyens connus, par exemple similaires à ceux employés pour la séparation du premier et du deuxième étage. Le module 14 présentant une densité très supérieure à celle de la partie non récupérée 16, celui-ci va tomber plus vite et plus loin. En outre, comme indique précédemment, le module, du fait de sa stabilité intrinsèque, va s'orienter automatiquement de sorte à avoir le nez vers le bas comme on peut le voir sur la figure 9C.

Ensuite, le module 14 chute suivant une trajectoire balistique. Au point V, Le module 14 effectue une rentrée atmosphérique balistique à incidence et dérapage nuls, jusqu'à attendre une vitesse subsonique, proche de Mach 0,85. L'altitude correspondant à cette vitesse est environ 10 km correspondant au point 6 de la trajectoire. Il peut être montré que cette vitesse correspond toujours sensiblement à une altitude de 10 km pour différents conditions de culmination du premier étage et différentes valeurs du coefficient balistique du module 14.

Au point VI (figure 8B), donc à environ 10 km d'altitude, le parachute de freinage 22 est déployé (figure 9D), par exemple au moyen d'une charge pyrotechnique. Le canister 23 est éjecté du logement central provoquant le déploiement du parachute de freinage 22. La vitesse du module diminue et le module se stabilise. Le module suit alors une trajectoire verticale et la vitesse du module est inférieure à 50 m/s.

Le boitier est rattaché au module par des câbles.

Le module 14 poursuit sa descente avec le parachute de freinage. (phase VII). Selon la présente invention, il est prévu, lors de cette phase, de permettre à la fois la mise en route du moteur 20 et le changement de configuration des ailettes 19b, 19c en vue de créer une surface portante par une disposition similaire à une aile volante subsonique. Du fait de l'altitude élevée à laquelle la phase de freinage commence, (environ 10 km), cette phase est suffisamment longue, par exemple elle peut durer environ 120 s. Par conséquent, le module dispose de suffisamment de temps pour effectuer les deux opérations.

Sur la figure 9E, on peut voir le changement de configuration des ailettes de l'empennage.

Le changement de configuration des ailettes 19b et 19c lorsque le parachute de freinage a été déployé présente l'avantage de ne pas solliciter en flexion les surfaces aérodynamiques des ailettes. En effet, du fait du freinage par le parachute 22, le déplacement des deuxièmes parties 19b2, 19c2 des ailettes s'effectue à très faible pression dynamique, de l'ordre de 400 Pa. En outre, comme cela a été mentionné précédemment, le changement de configuration peut être obtenu au moyen de simples moteurs électriques peu puissants.

Il est à noter qu'en utilisant comme moteur 20 un moteur d'avion standard, le temps de mise en route est d'environ 2 minutes, ce qui est en accord avec la durée de la phase de freinage sous parachute.

Lorsque le module a la forme d'une aile volante et que le moteur 20 a été activé, le parachute de freinage 22 est largué (figure 9F) ainsi que son canister 23, l'altitude est d'environ 6500 m (point VIII). Le module reprend alors de la vitesse.

Lorsqu'il atteint une vitesse d'environ 100 m/s, le module effectue une ressource lente (figure 9G) entre le point IX et le point X. Celle-ci dure environ 12 s, et termine en palier.

A partir du point X, il s'agit de la phase de croisière de retour, celle-ci a lieu à vitesse subsonique de l'ordre de Mach 0,3 et à une altitude de l'ordre de 5000 m.

Cette phase de croisière se termine par un atterrissage sur piste d'atterrissage conventionnelle, avantageusement non loin du pas de tir (figure 9I) du lanceur.

Le vol du module peut être complètement autonome ou commandé à distance.

Le module 14 selon la présente invention représente plus de 80 % de la valeur du lanceur et environ 60 % de la masse inerte du premier étage. Il est bien entendu que le pourcentage représenté par le module par rapport au coût total du lanceur dépend du nombre de moteurs du système propulsif. Par conséquent, la réutilisation du module 14 permet de réduire sensiblement les coûts de fabrication d'un nouveau lanceur.

En outre, le coût de développement du module 14 est réduit significativement par rapport au coût de développement d'un premier étage complètement réutilisable, d'environ 35 %.

En supposant dix réutilisations des moteurs du lanceurs grâce au retour du module 14, ce qui correspond environ à une durée de vie cumulée de 2000 s, le coût récurrent moyen, en considérant un cycle totale de vie du module de 100 vols, d'un premier étage selon la présente invention, est estimé à 25 % du coût de l'étage consommable correspondant.

On cherche avantageusement à réaliser des moteurs de propulsion très robustes afin de maximiser leur nombre de réutilisations.

Il apparaît donc que la présente invention permet une réduction importante des coûts de production et d'exploitation.

Selon l'invention, l'aérodynamique portante a lieu uniquement en phase subsonique pour la ressource, la phase de croisière et d'atterrissage. L'invention présente donc l'avantage de pouvoir utiliser des technologies connues et éprouvées dans le domaine des ailes volantes. Les coûts et le temps de développement sont donc réduits.

De manière avantageuse, on peut choisir des ailettes en flèche d'environ 30°. Grâce à ce choix de flèche, on obtient des positions des foyers aérodynamiques subsoniques et hypersoniques tel que le vol est stable à incidence et dérapage nul en mode hypersonique, supersonique et transsonique, et à faible incidence pour un vol portant en mode subsonique.

Grâce à l'invention, le module 14 présente une densité volumique importante puisqu'il ne comporte pas les réservoirs vides, ce qui facilite sa manipulation lors de son retour sur terre et son scénario de récupération.

La forme émoussée du nez permet de maximiser la traînée d'onde. Il convient de noter que des ailes d'empennage à profil épais, compatibles du vol subsonique, contribuent également à accroître la traînée d'onde vol supersonique.

Il est bien entendu que la forme des ailettes décrites ci-dessus n'est en aucun cas limitative et l'on peut prévoir par exemple de réaliser des ailettes 19b, 19c en plus de deux parties. On peut également envisager d'ajouter des « winglets » ou ailettes verticales marginales aux extrémités des ailettes 19a, 19c et/ou 19c, pour répondre à des besoins de la rentrée balistique et de la croisière de retour. Ces « winglets » peuvent être repliables ou non.

La disposition du moteur 20 dans un conduit confondu avec l'axe longitudinal du module alimente en air chaud le culot, ce qui a pour effet de réduire la traînée de culot et donc la traînée globale.

On peut prévoir d'optimiser encore la traînée globale du module au cours du vol de retour en croisière subsonique en optimisant la traînée de culot du module, sachant que cette traînée représente la contribution principale à la traînée globale subsonique. Pour cela, on peut prévoir d'ajouter un cône arrière de forme modifiable, par exemple gonflable lors de la phase de freinage par le parachute 22.

Les phases sous parachute et portante subsonique offrent de nombreux degrés de liberté pour ajuster les performances du module. On peut modifier la taille du parachute de freinage, modifier la vitesse de début de la ressource, on peut agir sur le facteur de charge transverse durant la ressource, on peut également modifier l'altitude de croisière retour du module jusqu'à la piste d'atterrissage.

Le module récupérable 14 selon la présente invention peut être utilisé pour toute taille de lanceurs, du nanolanceurs jusqu'aux lanceurs superlourds. Ce module est facilement adaptable à différents module de propulsion, différentes tailles de véhicule et différents types de mission.

Le module selon la présente invention a été décrit dans le cas d'un lanceur à deux étages, mais il peut également s'appliquer à un véhicule à un seul étage pour former un démonstrateur ou comme banc d'essais volant pour des expérimentations en vol, ou à un lanceur comportant au moins deux étages, le module étant situé dan l'étage inférieur ou dans l'un des étages supérieur.

## Revendications

1. Module récupérable pour module de propulsion destiné à lancer un engin dans l'espace comportant au moins un étage, ledit module récupérable étant apte à être solidaire d'une partie non récupérée (16) lors du lancement, ledit module récupérable (14) comportant un système propulsif (8) destiné au lancement de l'engin, des systèmes de commande et de contrôle du système propulsif, un moteur de propulsion (20) en vol subsonique, des surfaces portantes pour le vol subsonique, un train d'atterrissage (30) et un parachute de freinage (22), ledit module récupérable (14) étant destiné à être disposé en position inférieure dudit étage, la partie non récupérée (16) comportant au moins un réservoir (12, 13) pour alimenter le système propulsif (8), ledit module récupérable (14) et ladite partie non récupérée (16) étant destinés à être séparés lorsque le module de propulsion atteint une altitude donnée, le module récupérable (14) étant apte à atterrir de manière maîtrisée après un vol de croisière, par exemple pour un retour vers le site de lancement.

2. Module récupérable selon la revendication 1, dans lequel les surfaces portantes sont formées par une partie au moins de l'empennage (10) dudit engin.

3. Module récupérable selon la revendication 2, dans lequel ledit empennage (10) comporte au moins deux ailettes (19a, 19b, 19c).

4. Module récupérable selon la revendication 3, comportant au moins trois ailettes (19a, 19b, 19c) dont au moins deux (19b, 19c) sont de forme modifiable pour former des surfaces portantes.

5. Module récupérable selon la revendication 3 ou 4, dans lequel chacune des deux ailettes modifiables (19b, 19c) comporte une première partie (19b1, 19c1) fixée sur l'enveloppe du module et une deuxième partie (19b2, 19c2) montée mobile sur la première partie (19b1, 19c1), la déplacement de la deuxième partie (19b2, 19c2) par rapport à la première partie (19b1, 19c1) et étant obtenu par exemple au moyen d'au moins un moteur électrique ou hydraulique.

6. Module récupérable selon l'une des revendications 1 à 5, comportant un canal central (24) d'axe confondu avec l'axe du module récupérable, le moteur de propulsion (20) en vol subsonique étant disposé dans ledit canal central (24), ainsi que le parachute de freinage (22) enfermé dans un canister (25), ledit canister (25) étant disposé dans le canal d'éjection en arrière du moteur de propulsion (20) en vol subsonique.

7. Module récupérable selon l'une des revendications 1 à 6, dans lequel le moteur de propulsion (20) en vol subsonique est un moteur aérobie alimenté en carburant par des réservoirs prévus dans les ailettes de l'empennage.

8. Module récupérable selon l'une des revendications 1 à 7, dans lequel le module récupérable a un nez émoussé.

9. Module de propulsion destiné à lancer un engin dans l'espace comportant au moins un étage comportant un module récupérable selon l'une des revendications 1 à 8 et une partie destinée à ne pas être récupérée comportant au moins un réservoir (12, 13) pour alimenter le système propulsif (8).

10. Engin de type lanceur équipé d'un module de propulsion selon la revendication précédente, comportant au moins deux étages, un étage formé par le module de propulsion et un étage supportant une charge utile, lesdits deux étages étant séparables.

11. Lanceur selon la revendication précédente, ledit lanceur pouvant être du type nanolanceur jusqu'au lanceur superlourd.

12. Lanceur selon la revendication 11, dans lequel le module de propulsion forme l'étage inférieur du lanceur ou un des étages supérieurs.

13. Méthode de récupération du module récupérable selon l'une des revendications 1 à 8 comportant les étapes :
a) de séparation du module récupérable et de la partie non récupérée,
b) de chute libre du module récupérable,
c) de déploiement du parachute de freinage lorsque la vitesse du module récupérable devient subsonique,
d) de mise en route du moteur de propulsion en vol subsonique et de mise en place des surfaces portantes lors de la phase sous parachute,
e) de largage du parachute,
f) d'amorçage d'une ressource, après une éventuelle réaccélération,
g) de croisière de retour, et
h) d'atterrissage.

14. Méthode selon la revendication 13, dans laquelle lors de l'étape a), la séparation du module récupérable et de la partie non récupérée a lieu dans une direction sensiblement orthogonale au plan de la trajectoire.

15. Méthode selon la revendication 13 ou 14, dans laquelle l'étape d) a lieu à pression dynamique faible, de l'ordre de 400 Pa pour faciliter la variation de forme de la surface portante et de disposer du temps nécessaire à la mise en route du moteur de propulsion.

## Patentansprüche

1. Wiederverwendbares Modul für ein Antriebsmodul, das eine wenigstens einstufige Rakete in den Weltraum befördern soll, wobei das wiederverwendbare Modul so eingerichtet ist, dass es während des Starts fest mit einem nicht wiederverwendbaren Teil (16) verbunden werden kann, wobei das wiederverwendbare Modul (14) ein Antriebssystem (8) zum Starten der Rakete, Steuerungssysteme des Antriebssystems, ein Triebwerk (20) im Flug mit Unterschallgeschwindigkeit, Tragflächen für den Unterschallflug, ein Fahrwerk (30) und einen Bremsfallschirm (22) umfasst, wobei das wiederverwendbare Modul (14) zur Anbringung am unteren Ende der genannten Stufe bestimmt ist, wobei der nicht wiederverwendbare Teil (16) wenigstens einen Tank (12, 13), um das Antriebssystem (8) zu versorgen, aufweist, wobei das wiederverwendbare Modul (14) und der nicht wiederverwendbare Teil (16) bestimmt sind, getrennt zu werden, sobald das Antriebsmodul eine bestimmte Höhe erreicht, und wobei das wiederverwendbare Modul (14) eingerichtet ist, um nach einem Reiseflug kontrolliert zu landen, beispielsweise, um zum Startgelände zurückzukehren.

2. Wiederverwendbares Modul nach Anspruch 1, wobei die Tragflächen aus wenigstens einem Teil des Flugwerks (10) der Rakete gebildet sind.

3. Wiederverwendbares Modul nach Anspruch 2, wobei das Flugwerk (10) wenigstens zwei Stabilisierungsflossen aufweist (19a, 19b, 19c).

4. Wiederverwendbares Modul nach Anspruch 3, mit wenigstens drei Stabilisierungsflossen (19a, 19b, 19c), von denen wenigstens zwei (19b, 19c) veränderbar sind, um die Tragflächen zu bilden.

5. Wiederverwendbares Modul nach Anspruch 3 oder 4, wobei jede der zwei veränderbaren Stabilisierungsflossen (19b, 19c) einen ersten Teil (19b1, 19c1), welcher an der Hülle des Moduls befestigt ist, und einen zweiten Teil (19b2, 19c2), der beweglich auf dem ersten Teil (19b1, 19c1) montiert ist, aufweist, wobei das Verstellen des zweiten Teils (19b2, 19c2) im Verhältnis zum ersten Teil (19b1, 19c1) beispielsweise mit wenigstens einem Elektromotor oder einem hydraulischen Motor erzielt wird.

6. Wiederverwendbares Modul nach einem der Ansprüche 1 bis 5, mit einem zentralen Kanal (24), dessen Achse mit der des wiederverwendbaren Moduls identisch ist, wobei sich das Triebwerk (20) für den Unterschallflug in zentralen Kanal (24) befindet, sowie mit einem in einem Behälter (25) eingeschlossenen Bremsfallschirm (22), wobei der Behälter (25) im Ausstoßkanal hinter dem Triebwerk (20) für den Unterschallflug angeordnet ist.

7. Wiederverwendbares Modul nach einem der Ansprüche 1 bis 6, wobei das Triebwerk (20) für den Unterschallflug ein aerobes Triebwerk ist, das mit Treibstoff aus den dafür vorgesehenen Tanks in den Flügeln des Flugwerks versorgt wird.

8. Wiederverwendbares Modul nach einem der Ansprüche 1 bis 7, wobei das wiederverwendbare Modul eine runde Nase hat.

9. Antriebsmodul, das eine wenigstens einstufige Rakete in den Weltraum befördern soll und ein wiederverwendbares Modul nach einem der Ansprüche 1 bis 8 sowie einen Teil, der nicht wiederverwendbar ist, und wenigstens einen Tank (12, 13), um das Antriebssystem (8) zu versorgen, aufweist.

10. Rakete vom Typ einer Trägerrakete, die von einem Antriebsmodul gemäß dem vorhergehenden Anspruch versorgt wird und wenigstens zweistufig ist, wobei eine Stufe von dem Triebwerk gebildet ist und eine Stufe eine Nutzlast trägt, wobei die genannten zwei Stufen trennbar sind.

11. Trägerrakete nach dem vorhergehenden Anspruch, wobei die Trägerrakete von einer kleine Nanorakete bis einer Schwerlast-Trägerrakete sein kann.

12. Trägerrakete nach Anspruch 11, wobei das Antriebsmodul die untere Triebwerksstufe der Trägerrakete oder eine der Oberstufen bildet.

13. Verfahren zur Bergung des wiederverwendbaren Moduls nach einem der Ansprüche 1 bis 8, bestehend aus folgenden Phasen:
a) Trennung des wiederverwendbaren Moduls von dem nicht wiederverwendbaren Teil,
b) freier Fall des wiederverwendbaren Moduls,
c) Auslösen des Bremsfallschirms, wenn wiederverwendbares Modul Unterschallgeschwindigkeit erreicht hat,
d) Starten des Triebwerks und Vorbereiten der Tragflächen während des Falls mit Bremsfallschirm,
e) Abwurf des Bremsfallschirms,
f) Zünden eine Kurve, nach einer eventuellen erneuten Beschleunigung,
g) Rückflug und
h) Landung.

14. Verfahren nach Anspruch 13, **dadurch gekennzeichnet, dass** in Phase a) das wiederverwendbare Modul und der nicht wiederverwendbare Teil in einer etwa rechtwinkligen Richtung zum Plan der Flugbahn getrennt werden.

15. Verfahren nach Anspruch 13 oder 14, wobei Phase d) mit geringem dynamischen Druck stattfindet, in der Größenordnung von 400 Pa, um die Veränderung der Form der Tragflächen zu erleichtern und die erforderliche Zeit für den Start des Triebwerks zu bekommen.

## Claims

1. A recoverable module for a propulsion module intended to launch a craft into space comprising at least one stage, the said recoverable module being secured to a part which is not recovered (16) at launch, the said recoverable module (14) having a propulsive system (8) intended for the launch of the craft, systems for command and control of the propulsive system, a subsonic flight propulsion motor (20), airfoils for the subsonic flight, a landing gear (30) and a braking parachute (22), the said recoverable module (14) being intended to be installed in a lower position of the said stage, the non-recovered part (16) having at least one tank (12, 13) to feed the propulsive system (8), the said recoverable module (14) and the said non-recovered part (16) being intended to be separated when the propulsion module reaches a given altitude, and the recoverable module (14) being capable of landing in a controlled fashion after a coasting flight, for example for a return to the launch site.

2. A recoverable module according to claim 1, in which the airfoils are formed by at least a part of the tail unit (10) of the said craft.

3. A recoverable module according to claim 2, in which the said tail unit (10) comprises at least two fins (19a, 19b, 19c).

4. A recoverable module according to claim 3, comprising at least three fins (19a, 19b, 19c) of which at least two (19b, 19c) have a modifiable shape in order to form airfoils.

5. A recoverable module according to claim 3 or 4, in which each of the two modifiable fins (19b, 19c) has a first part (19b1, 19c1) attached to the case of the module and the second part (19b2, 19c2) installed so as to be movable on the first part (19b1, 19c1), and the displacement of the second part (19b2, 19c2) relative to the first part (19b1, 19c1) being obtained, for example, by means of at least one electric or hydraulic motor.

6. A recoverable module according to one of the claims 1 to 5, comprising a central channel (24) having an axis which is shared with the axis of the recoverable module, the subsonic flight propulsion motor (20) being installed in the said central channel (24), together with the braking parachute (22) enclosed in a canister (25), and the said canister (25) being installed in the exhaust duct at the rear of the motor of the subsonic flight propulsion motor (20).

7. A recoverable module according to one of the claims 1 to 6, in which the subsonic flight propulsion motor (20) is an air-breathing motor fed with fuel by tanks installed in the fins of the tail unit.

8. A recoverable module according to one of the claims 1 to 7, in which the recoverable module has a blunt nose.

9. A propulsion module intended to launch a craft into space comprising at least one stage comprising a recoverable module according to one of the claims 1 to 8 and a part intended not to be recovered comprising at least one tank (12, 13) to feed the propulsive system (8).

10. A craft of the launcher type fitted with a propulsion module according to the previous claim, comprising at least two stages, one stage formed by the propulsion module and a stage supporting a payload, the said two stages being separable.

11. A launcher according to the previous claim, in which the said launcher can range from the nanolauncher to the super heavy launcher type.

12. A launcher according to claim 11, in which the propulsion module forms the lower stage of the launcher or one of the upper stages.

13. A method of recovery of the recoverable module according to one of the claims 1 to 8 comprising the following steps:
a) separation of the recoverable module and the non-recovered part,
b) freefall of the recoverable module,
c) deployment of the braking parachute when the speed of the recoverable module becomes subsonic,
d) start-up of the subsonic flight propulsion motor, and positioning of the airfoils during the parachute phase,
e) jettisoning of the parachute,
f) starting a flare, after possible reacceleration,
g) return coasting, and
h) landing.

14. A method according to claim 13, in which, during step a), the separation of the recoverable module and of the non-recovered part takes place in a direction which is roughly orthogonal to the trajectory plane.

15. A method according to claim 13 or 14, in which step d) takes place at low dynamic pressure, of the order of 400 Pa, to facilitate the variation of the shape of the airfoil, and to have the time required to start the propulsion motor.
